# EUROPEAN PATENT APPLICATION

(11) **EP 2 589 840 A2**
(43) Date of publication of application: **08.05.2013**
(21) Application number: 12191061.6
(22) Date of filing: 02.11.2012
(51) Int. Cl.: F16H 61/32

(54) **Transmission actuating device**

(30) Priority: 04.11.2011 JP 2011242306
(71) Applicant: JTEKT CORPORATION, Osaka-shi Osaka 542-8502 (JP)
(72) Inventor: Yukitake, Yasuhiro, Osaka-shi,, Osaka 542-8502 (JP)
(74) Representative: Winter, Brandl, Fürniss, Hübner, Röss, Kaiser, Polte - Partnerschaft

(57) **Abstract**

A transmission actuating device includes: an internal lever (16); a forward/reverse rotatable single electric motor; a shift conversion mechanism (25) that causes the internal lever to move in a shift direction; a shift electromagnetic clutch (43) that allows or interrupts transmission of rotational driving force to the shift conversion mechanism (25); a select conversion mechanism that causes the internal lever (16) to move in a select direction; and a select electromagnetic clutch (45) that allows or interrupts transmission of rotational driving force to the select conversion mechanism (25). At the time of shifting from first gear to second gear, the electric motor is rotated, and both the shift electromagnetic clutch and the select electromagnetic clutch are engaged during the rotation of the electric motor. Thus, the internal lever is moved in an oblique direction.

## Description

### BACKGROUND OF THE INVENTION

### 1. Field of the Invention

The invention relates to a transmission actuating device used to actuate a transmission.

### 2. Description of Related Art

There is a conventional gear-shifting apparatus of an automated manual transmission that is a manual transmission in which gearshift is performed without depressing a clutch pedal. The above-described gear-shifting apparatus includes an electric actuator that operates a shift lever to shift the gear of a shift mechanism. For example, an electric actuator described in Japanese patent Application Publication No. 2011-75097 (JP 2011-75097 A) includes a single electric motor, a shift driving mechanism and a select driving mechanism. The shift driving mechanism causes a shift lever to perform a shift operation with the use of power from the electric motor. The select driving mechanism causes the shift lever to perform a select operation with the use of power from the electric motor. The electric actuator includes a shift electromagnetic clutch and a select electromagnetic clutch. The shift electromagnetic clutch is provided so as to be disconnectable from the electric motor. The select electromagnetic clutch is provided so as to be disconnectable from the electric motor.

In the electric actuator described in JP 2011-75097 A, when the shift lever is caused to perform a shift operation, the shift electromagnetic clutch is connected to the electric motor, and the select electromagnetic clutch is disconnected from the electric motor. On the other hand, when the shift lever is caused to perform a select operation, the shift electromagnetic clutch is disconnected from the electric motor, and the select electromagnetic clutch is connected to the electric motor. That is, by selectively switching the electromagnetic clutch connected to the electric motor, between the shift electromagnetic clutch and the select electromagnetic clutch, the destination to which the power of the electric motor is transmitted is switched between the shift driving mechanism and the select driving mechanism. In the gear-shifting apparatus of the automated manual transmission, performing a gear shift operation in the shortest possible time is demanded.

### SUMMARY OF THE INVENTION

It is an object of the invention to provide a transmission actuating device that is able to perform a gear shift operation in a short time.

An aspect of the invention relates to a transmission actuating device for actuating a transmission that includes a geared power transmission device. The transmission actuating device includes: a shift lever used to perform a shift operation of the power transmission device; a single electric motor that is rotatable in a forward direction that is a first rotation direction and a reverse direction that is a second rotation direction; a shift driving mechanism that causes the shift lever to move in a first direction along a predetermined shift direction to perform a shift operation upon receiving rotational driving force from the electric motor that is rotating in the first rotation direction, and that causes the shift lever to move in a second direction along the shift direction, the second direction being opposite to the first direction, to perform a shift operation upon receiving rotational driving force from the electric motor that is rotating in the second rotation direction; a shift electromagnetic clutch that is able to allow or interrupt transmission of rotational driving force from the electric motor to the shift driving mechanism; a select driving mechanism that causes the shift lever to move in a third direction along a select direction, which intersects with the shift direction, to perform a select operation upon receiving rotational driving force from the electric motor that is rotating in the first rotation direction, and that causes the shift lever to move in a fourth direction along the select direction, the fourth direction being opposite to the third direction, to perform a select operation upon receiving rotational driving force from the electric motor that is rotating in the second rotation direction; and a select electromagnetic clutch that is able to allow or interrupt transmission of rotational driving force from the electric motor to the select driving mechanism. In order to shift from predetermined Mth-gear to predetermined Nth-gear in the transmission, the shift driving mechanism moves the shift lever in the first direction, and the select driving mechanism moves the shift lever in the third direction in order to shift from Mth-gear to Nth-gear. A shift direction position and a select direction position of the shift lever at Mth-gear are different from a shift direction position and a select direction position of the shift lever at Nth-gear, respectively. The transmission actuating device further includes a first control unit that executes, at the time of shifting from Mth-gear to Nth-gear, control to engage both the shift electromagnetic clutch and the select electromagnetic clutch during rotation of the electric motor while executing rotation control of the electric motor to cause the shift lever to move in an oblique direction that is a resultant of the first direction and the third direction.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic exploded perspective view of the configuration of part of a gear-shifting apparatus to which a transmission actuating device according to an embodiment of the invention is applied;
FIG. 2A is a view for illustrating a shift pattern of a shift operation mechanism shown in FIG. 1;
FIG. 2B is a view that shows a first state of the shift operation mechanism shown in FIG. 1;
FIG. 2C is a view that shows a second state of the shift operation mechanism shown in FIG. 1;
FIG. 2D is a view that shows a third state of the shift operation mechanism shown in FIG. 1;
FIG. 3 is a perspective view that shows the configuration of an electric actuator shown in FIG. 1;
FIG. 4 is a sectional view that shows the configuration of the electric actuator shown in FIG. 1;
FIG. 5A is a sectional view taken along the line V-V in FIG. 4;
FIG. 5B is a table that shows the relationship between the rotation direction of an electric motor and the moving direction of an internal lever;
FIG. 6 is a timing chart for illustrating an example of shift control process for upshifting from first gear to second gear;
FIG. 7A is a view that shows a first state of engagement between the internal lever and fork heads in the case of upshifting from first gear to second gear;
FIG. 7B is a view that shows a second state of engagement between the internal lever and the fork heads in the case of upshifting from first gear to second gear;
FIG. 7C is a view that shows a third state of engagement between the internal lever and the fork heads in the case of upshifting from first gear to second gear;
FIG. 7D is a view that shows a fourth state of engagement between the internal lever and the fork heads in the case of upshifting from first gear to second gear;
FIG. 8 is a timing chart for illustrating an example of a shift control process for downshifting from second gear to first gear; and
FIG. 9 is a timing chart for illustrating an example of a shift control process for upshifting from first gear to second gear.

### DETAILED DESCRIPTION OF EMBODIMENTS

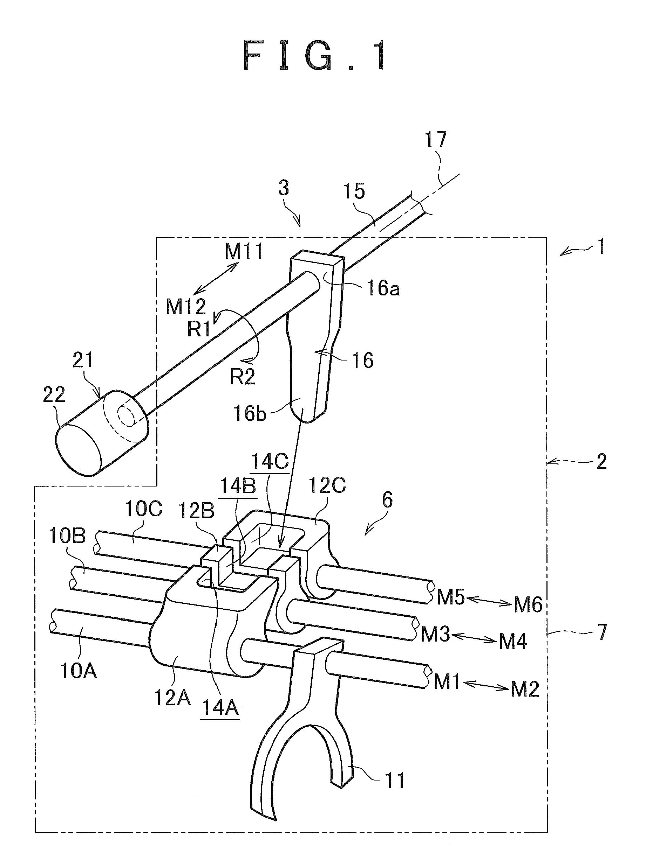

Hereinafter, an embodiment of the invention will be described in detail with reference to the accompanying drawings. FIG. 1 is a schematic exploded perspective view of the configuration of part of a gear-shifting apparatus 1 to which a transmission actuating device 3 according to the embodiment of the invention is applied. The gear-shifting apparatus 1 includes a transmission 2 and the transmission actuating device 3 that actuates the transmission 2 to shift gears. The transmission 2 includes a power transmission device (not shown), a shift operation mechanism 6 and a gear housing 7. The power transmission device is formed of a known constant-mesh parallel-shaft gear power transmission device. The shift operation mechanism 6 changes the power transmission path of the power transmission device among a plurality of power transmission paths. The gear housing 7 accommodates the power transmission device and the shift operation mechanism 6. The gear-shifting apparatus 1 that includes the transmission 2 is mounted in a vehicle, such as a passenger automobile or a truck. By changing the power transmission path in the power transmission device, it is possible to change the power transmission ratio.

The shift operation mechanism 6 includes a plurality of fork shafts 10A, 10B, 10C. The fork shafts 10A, 10B, 10C are accommodated in the gear housing 7 and extend parallel to each other. The fork shaft 10A is provided so as to be movable in axial directions M1, M2. The fork shaft 10B is provided so as to be movable in axial directions M3, M4. The fork shaft 10C is provided so as to be movable in axial directions M5, M6. The axial directions M1, M3, M5 are oriented in the same direction and are parallel to each other. The axial directions M2, M4, M6 are oriented in a direction opposite to the axial directions M1, M3, M5.

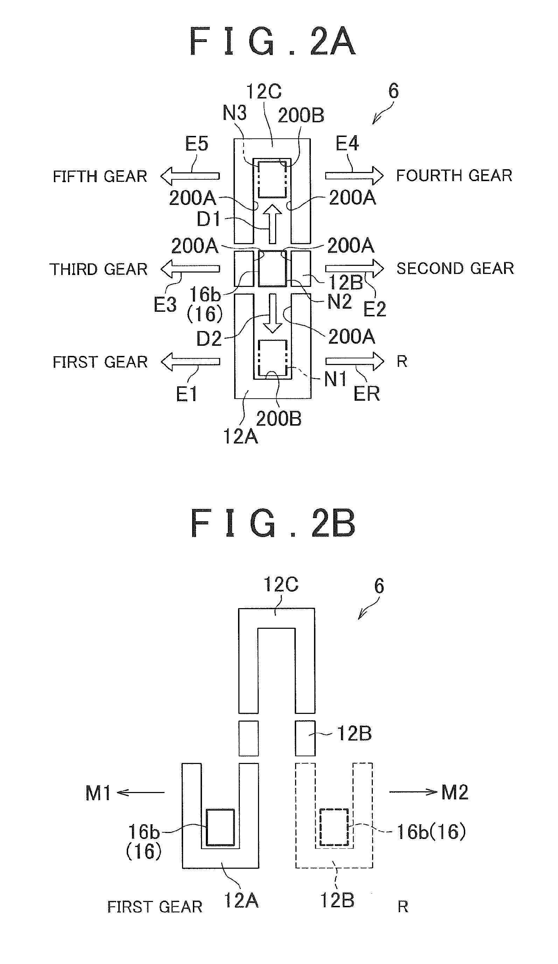

The fork shafts 10A, 10B, 10C are arranged parallel to each other so as to be aligned on a straight line when viewed from the axial directions M1, M3, M5 (M2, M4, M6). Fork heads 12A, 12B, 12C are fixed to middle portions of the fork shafts 10A, 10B, 10C, respectively. The fork heads 12A, 12B, 12C are actuated by the transmission actuating device 3. The fork heads 12A, 12B, 12C are aligned with respect to the axial directions M1, M3, M5, and are provided so as to correspond to a plurality of select direction positions. In the present embodiment, the select direction positions are, for example, three select direction positions, and are a first gear/reverse gear select direction position, a second gear/third gear select direction position, and a fourth gear/fifth gear select direction position, for example. Each of the fork heads 12A, 12B, 12C has a facing surface that faces the transmission actuating device 3. The facing surface of the fork heads 12A, 12B, 12C are flush with each other. Engagement recesses 14A, 14B, 14C are formed in the respective facing surfaces. Each of the engagement recesses 14A, 14B, 14C has inner walls 200A (see FIG. 2A) that are perpendicular to a corresponding one of the axial directions M1 to M6 of the fork shafts 10A to 10C. In addition, each of the engagement recesses 14A, 14C located at respective ends has an inner wall 200B (see FIG. 2A) that is perpendicular to the direction along the first and second axial directions M11, M12 of a shift select shaft 15, and that connects the ends of the side faces of a corresponding one of the engagement recesses 14A, 14C to each other. A distal end portion 16b of an internal lever (shift lever) 16 enters one of the engagement recesses 14A, 14B, 14C. When the distal end portion 16b contacts the inner walls 200A and the inner wall 200B of one of the engagement recesses 14A, 14C, the distal end portion 16b is engaged with a corresponding one of the fork heads 12A, 12C. When the distal end portion 16b contacts the inner walls 200A of the engagement recess 14B, the distal end portion 16b is engaged with the fork head 12B. The distal end portion 16b of the internal lever 16 is able to move between engagement positions (select direction positions), at which the distal end portion 16b is engaged with the respective fork heads 12A, 12B, 12C, through an internal space of the engagement recesses 14A, 14B, 14C.

In addition, a shift fork 11 is fixed to each of the fork shafts 10A, 10B, 10C. Each shift fork 11 is engaged with a corresponding operated member that is operated to change the power transmission path of the power transmission device. Although the operated members are not shown, the operated members include, for example, a clutch sleeve and a synchronizer mechanism. In FIG. 1, only the shift fork 11 provided on the fork shaft 10A is shown. Through movement of each shift fork 11 in a corresponding one of the axial directions M1 to M6, the shift fork 11 is engaged with the corresponding operated member to actuate the operated member. Note that FIG. 1 shows engagement grooves as the engagement recesses 14A, 14B, 14C. However, engagement holes may be, of course, employed instead of the engagement grooves.

The transmission actuating device 3 includes the columnar shift select shaft 15 and an electric actuator 21. The shift select shaft 15 causes the shift operation mechanism 6 to perform a shift operation and a select operation. The electric actuator 21 is used as a rotary driving source for causing the shift select shaft 15 to perform a shift operation and a select operation. The shift select shaft 15 has a central axis 17. The shift select shaft 15 is supported by the gear housing 7 so as to be rotatable about the axis (that is, the central axis 17) of the shift select shaft 15 in a first rotation direction R1 or a second rotation direction R2 and movable in the first axial direction M11 or the second axial direction M12. The shift select shaft 15 is arranged so as to be neither parallel to nor intersecting with each of the fork shafts 10A, 10B, 10C, and the shift select shaft 15 and each of the fork shafts 10A, 10B, 10C form an angle of 90 degrees when viewed from above. The second rotation direction R2 is a rotation direction opposite to the first rotation direction R1. The second axial direction M12 is an axial direction opposite to the first axial direction M11.

A base end portion 16a of the internal lever 16 accommodated in the gear housing 7 is fixed to a middle portion of the shift select shaft 15. The internal lever 16 rotates together with the shift select shaft 15 about the central axis 17 of the shift select shaft 15. The distal end portion (left end portion in FIG. 1) of the shift select shaft 15 protrudes outward from the gear housing 7. When the shift select shaft 15 is moved in the first axial direction M11 by the electric actuator 21, the internal lever 16 is moved in the first axial direction M11. On the other hand, when the shift select shaft 15 is moved in the second axial direction M12 by the electric actuator 21, the internal lever 16 is moved in the second axial direction M12. Then, the distal end portion 16b of the internal lever 16 is engaged with a selected one of the fork heads 12A, 12B, 12C, at the corresponding select direction position. In this way, a select operation is completed.

When the shift select shaft 15 is rotated in the first rotation direction R1 by the electric actuator 21, the internal lever 16 is pivoted in the first rotation direction R1 about the shift select shaft 15. On the other hand, when the shift select shaft 15 is rotated in the second rotation direction R2 by the electric actuator 21, the internal lever 16 is pivoted in the second rotation direction R2 about the shift select shaft 15. As a result, one of the fork heads 12A, 12B, 12C, which has been engaged with the internal lever 16, moves in one of the axial directions M1 to M6 of a corresponding one of the fork shafts 10A, 10B, 10C. In this way, a shift operation is completed.

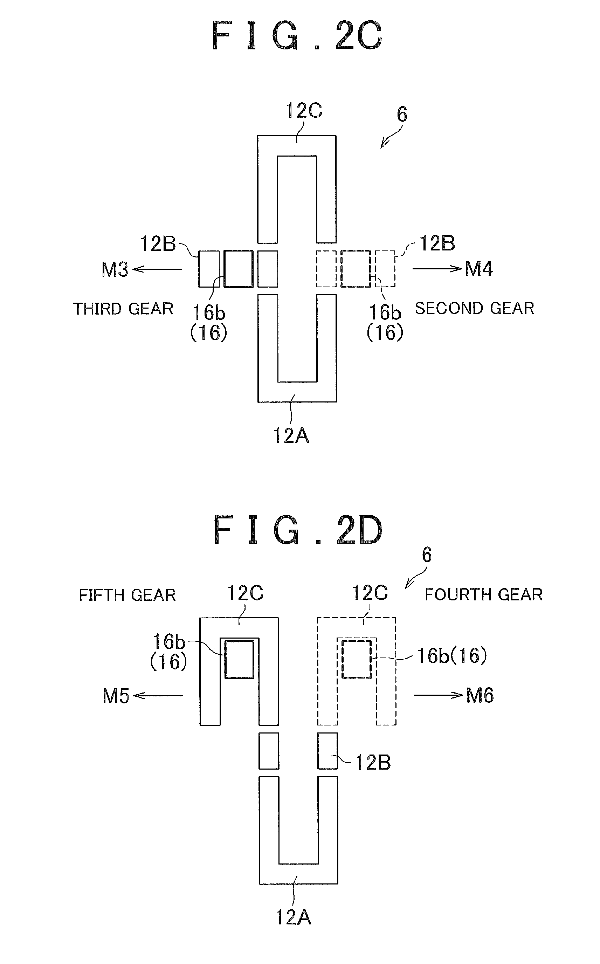

FIG. 2A is a view for illustrating a shift pattern of the shift operation mechanism 6, more specifically, a change in the position of (the distal end portion 16b of) the internal lever 16 at the time of gear shifting. FIG. 2A shows a state where the distal end portion 16b of the internal lever 16 is at a second neutral position N2 (second-gear neutral position, third-gear neutral position) (indicated by a bold continuous line in FIG. 2A). FIG. 2B shows a state of the shift operation mechanism 6, where first gear or reverse gear ("R") is selected. A state where first gear is selected is indicated by a continuous line, and a state where reverse gear is selected is indicated by a dashed line. FIG. 2C shows a state of the shift operation mechanism 6, where second gear or third gear is selected. A state where third gear is selected is indicated by a continuous line, and a state where second gear is selected is indicated by a dashed line. FIG. 2D shows a state of the shift operation mechanism 6k, where fourth gear or fifth gear is selected. A state where fifth gear is selected is indicated by a continuous line, and a state where fourth gear is selected is indicated by a dashed line.

Shift direction positions when the fork shafts 10A to 10C corresponding to the fork heads 12A to 12C, engaged with the internal lever 16, have not been axially moved from predetermined reference positions are referred to as neutral positions N1, N2, N3, respectively. The above-described second neutral position N2 is a neutral position at which the distal end portion 16b of the internal lever 16 is engaged with the fork head 12B. The first neutral position N1 (reverse neutral position, first-gear neutral position) is a neutral position at which the distal end portion 16b of the internal lever 16 is engaged with the fork head 12A. The third neutral position N3 (fourth-gear neutral position, fifth-gear neutral position) is a neutral position at which the distal end portion 16b of the internal lever 16 is engaged with the fork head 12C. When the distal end portion 16b of the internal lever 16 is at one of the neutral positions N1, N2, N3, an output gear is in a neutral state, and the shift fork 11 corresponding to one of the fork heads 12A, 12B, 12C, which is engaged with the distal end portion 16b of the internal lever 16, is not engaged with the operated member. When the internal lever 16 (the distal end portion 16b) is at the second neutral position N2, if the electric actuator 21 is driven and the shift select shaft 15 is moved in the axial direction M12, the internal lever 16 (the distal end portion 16b) moves in the direction of an outline arrow D2 (fourth direction) in FIG. 2A (described below) and then the internal lever 16 (the distal end portion 16b) is guided to the first neutral position N1. When the internal lever 16 (the distal end portion 16b) is at the second neutral position N2, if the electric actuator 21 is driven and the shift select shaft 15 is moved in the first axial direction M11, the internal lever 16 (the distal end portion 16b) moves in the direction of an outline arrow D1 (third direction) in FIG. 2A and then the internal lever 16 (the distal end portion 16b) is guided to the third neutral position N3.

As shown in FIG. 2A to FIG. 2D, a first-gear shift position, the first neutral position N1 and a reverse shift position all are arranged at a first select direction position, that is, at the same position in a select direction. The first select direction position is the lowest select direction position in FIG. 2A to FIG. 2D. A second-gear shift position, the second neutral position N2 and a third-gear shift position all are arranged at a second select direction position, that is, at the same position in the select direction. A fourth-gear shift position, the third neutral position N3 and a fifth-gear shift position all are arranged at a third select direction position, that is, at the same position in the select direction.

The first-gear shift position, the third-gear shift position and the fifth-gear shift position all are arranged at a first shift direction position (left-side shift direction position in FIG. 2A), that is, at the same position in a shift direction. These shift positions are located on the deceleration side with respect to the neutral positions N1, N2, N3. The deceleration side is indicated by outline arrows E1, E3, E5 in FIG. 2A. The reverse shift position, the second-gear shift position and the fourth-gear shift position all are arranged at a second shift direction position (right-side shift direction position in FIG. 2A), that is, at the same position in the shift direction. These shift positions are located on the acceleration side with respect to the neutral positions N1, N2, N3. The acceleration side is indicated by outline arrows ER, E2, E4 in FIG. 2A.

As shown in FIG. 2A and FIG. 2B, when first gear is selected, the distal end portion 16b of the internal lever 16 is at the first-gear shift position ("first gear" in FIG. 2A) in FIG. 2A. At this time, the corresponding operated member is in mesh with the first-gear output gear of the power transmission device. Thus, the output gear is set at first gear. When the internal lever 16 is at the first-gear shift position, the internal lever 16 is engaged with the fork head 12A, and the internal lever 16 together with the fork head 12A has been moved in the axial direction M1 (second direction) from the first neutral position N1 to the first shift direction position. The first shift direction position is a left-side shift direction position in FIG. 2A. The movement in the axial direction M1 is a movement in the direction of the outline arrow E1 in FIG. 2A.

As shown in FIG. 2A and FIG. 2C, when second gear is selected, the distal end portion 16b of the internal lever 16 is at the second-gear shift position ("second gear" in FIG. 2A) in FIG. 2A. At this time, the corresponding operated member is in mesh with the second-gear output gear of the power transmission device. Thus, the output gear is set at second gear. When the internal lever 16 is at the second-gear shift position, the internal lever 16 is engaged with the fork head 12B, and the internal lever 16 together with the fork head 12B has been moved in the axial direction M4 (first direction) from the second neutral position N2 to the second shift direction position. The second shift direction position is a right-side shift direction position in FIG. 2A. The movement in the axial direction M4 is a movement in the direction of the outline arrow E2 in FIG. 2A.

When third gear is selected, the distal end portion 16b of the internal lever 16 is at the third-gear shift position ("third gear" in FIG. 2A) in FIG. 2A. At this time, the corresponding operated member is in mesh with the third-gear output gear of the power transmission device. Thus, the output gear is set at third gear. When the internal lever 16 is at the third-gear shift position, the internal lever 16 is engaged with the fork head 12B, and the internal lever 16 together with the fork head 12B has been moved in the axial direction M3 (second direction) from the second neutral position N2 toward the first shift direction position (in the direction of the outline arrow E3 in FIG. 2A). The first shift direction position is a left-side shift direction position in FIG. 2A. The movement in the axial direction M3 is a movement in the direction of the outline arrow E3 in FIG. 2A.

As shown in FIG. 2A and FIG. 2D, when fourth gear is selected, the distal end portion 16b of the internal lever 16 is at the fourth-gear shift position ("fourth gear" in FIG. 2A) in FIG. 2A. At this time, the corresponding operated member is in mesh with the fourth-gear output gear of the power transmission device. Thus, the output gear is set at fourth gear. When the internal lever 16 is at the fourth-gear shift position, the internal lever 16 is engaged with the fork head 12C, and the internal lever 16 together with the fork head 12C has been moved in the axial direction M6 (first direction) from the third neutral position N3 to the second shift direction position. The second shift direction position is the right-side shift direction position in FIG. 2A. The movement in the axial direction M6 is a movement in the direction of the outline arrow E4 in FIG. 2A.

When fifth gear is selected, the distal end portion 16b of the internal lever 16 is at the fifth-gear shift position ("fifth gear" in FIG. 2A) in FIG. 2A. At this time, the corresponding operated member is in mesh with the fifth-gear output gear of the power transmission device. Thus, the output gear is set at fifth gear. When the internal lever 16 is at the fifth-gear shift position, the internal lever 16 is engaged with the fork head 12C, and the internal lever 16 together with the fork head 12C has been moved in the axial direction M5 (second direction) from the third neutral position N3 to the first shift direction position. The first shift direction position is the left-side shift direction position in FIG. 2A. The movement in the axial direction M5 is a movement in the direction of the outline arrow E5 in FIG. 2A.

As shown in FIG. 2A and FIG. 2B, when reverse gear is selected, the distal end portion 16b of the internal lever 16 is at the reverse shift position ("reverse gear" in FIG. 2A) in FIG. 2A. At this time, the corresponding operated member is in mesh with the reverse output gear of the power transmission device. Thus, the output gear is set at reverse gear. When the internal lever 16 is at the reverse shift position, the internal lever 16 is engaged with the fork head 12A, and the internal lever 16 together with the fork head 12A has been moved in the axial direction M2 (first direction) from the first neutral position N1 to the second shift direction position. The second shift direction position is the right-side shift direction position in FIG. 2A. The movement in the axial direction M2 is a movement in the direction of the outline arrow ER in FIG. 2A.

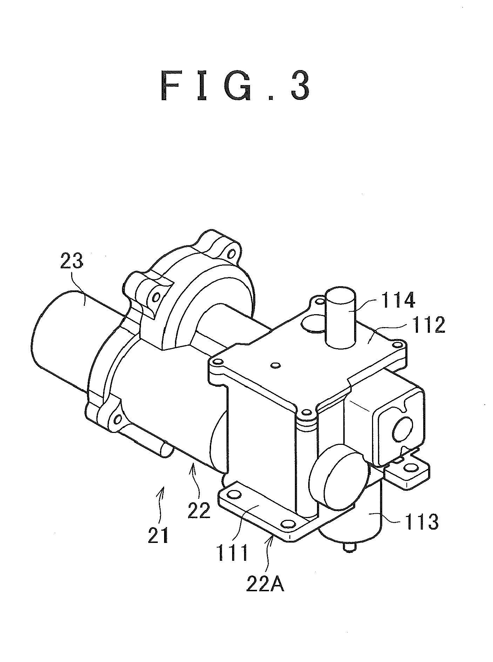

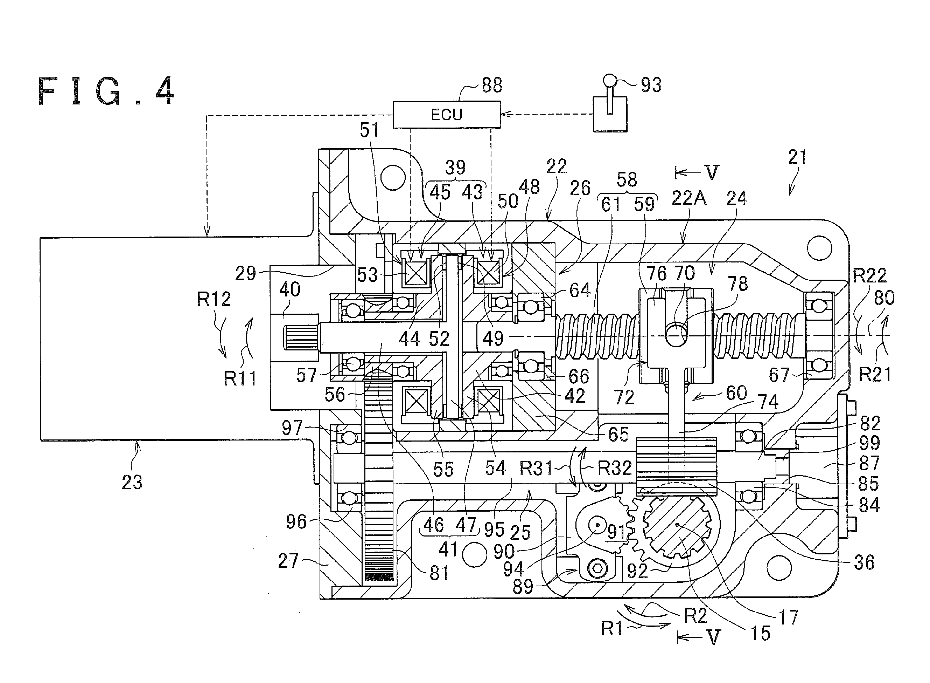

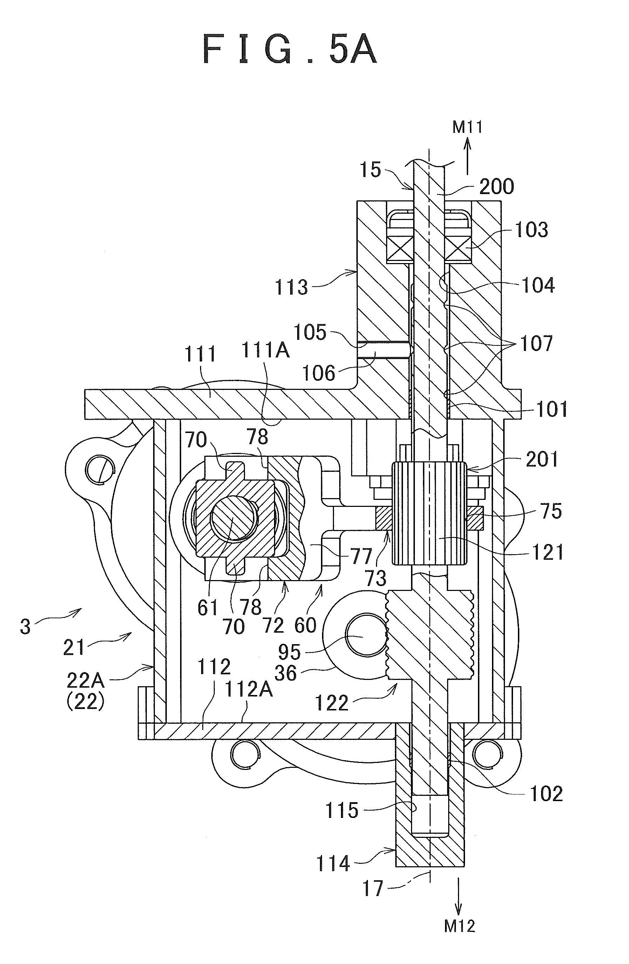

FIG. 3 is a perspective view that shows the configuration of the electric actuator 21. FIG. 4 is a sectional view that shows the configuration of the electric actuator 21. FIG. 5A is a sectional view taken along the line V-V in FIG. 4. Note that, in FIG. 3, the shift select shaft 15 is not shown. Hereinafter, the configuration of the electric actuator 21 will be described with reference to FIG. 3, FIG. 4 and FIG. 5A. The electric actuator 21 includes a closed-end substantially cylindrical housing 22. The electric actuator 21 is fixed to the outer surface of the gear housing 7 (see FIG. 1) or a predetermined portion of the vehicle.

The electric actuator 21 includes an electric motor 23, a shift conversion mechanism (shift driving mechanism) 24, a select conversion mechanism (select driving mechanism) 25, and an interrupting unit 26. The electric motor 23 is, for example, a brushless electric motor. The shift conversion mechanism 24 converts rotary torque (rotational driving force), generated by the electric motor 23, into force that rotates the shift select shaft 15 about its axis. The select conversion mechanism 25 converts rotary torque, generated by the electric motor 23, into force that moves the shift select shaft 15 in the first axial direction M11 or the second axial direction M12. The interrupting unit 26 allows or interrupts transmission of rotary torque, generated by the electric motor 23, to the shift conversion mechanism 24 and/or the select conversion mechanism 25. The shift conversion mechanism 24, the select conversion mechanism 25 and the interrupting unit 26 are accommodated in the housing 22.

An opening portion (left side shown in FIG. 4) of the housing 22 is closed by a substantially plate-like lid 27. The housing 22 and the lid 27 each are made of a metal material, such as casting iron and aluminum. The outer periphery of the lid 27 is fitted to the opening portion of the housing 22. A circular through-hole 29 is formed in the lid 27. The through-hole 29 extends from the inner surface (right surface shown in FIG. 4) to the outer surface (left surface shown in FIG. 4). In addition, a body casing of the electric motor 23 is fixed to the outer surface of the lid 27. The electric motor 23 is rotatable in a forward direction and a reverse direction, that is, the first rotation direction R11 and the second rotation direction R12. The first rotation direction R11 is a clockwise direction, when viewed from the motor output shaft side, and is referred to as "CW". The second rotation direction R12 is a counterclockwise direction, when viewed from the motor output shaft, and is referred to as "CCW". For example, a brushless electric motor is employed as the electric motor 23. The body casing of the electric motor 23 is attached so as to be exposed on the outside of the housing 22. An output shaft 40 of the electric motor 23 is arranged so as to be neither parallel to nor intersecting with the shift select shaft 15 such that, when viewed from above, the output shaft 40 and the shift select shaft 15 form an angle of 90 degrees. The output shaft 40 extends in a predetermined direction (lateral direction shown in FIG. 4) perpendicular to the axial directions M11, M12 (see FIG. 5A). The output shaft 40 faces the inside the housing 22 via the through-hole 29 of the lid 27, and faces the interrupting unit 26.

As shown in FIG. 5A, the housing 22 includes a distal end-side portion (lower end-side portion shown in FIG. 5A) of the shift select shaft 15 and a substantially box-shaped main housing 22A. The main housing 22A mainly accommodates components of the shift conversion mechanism 24. The main housing 22A includes a first side wall 111 (see FIG. 5A), a second side wall 112 (see FIG. 5A), a first shaft holder 113 (see FIG. 5A), and a second shaft holder 114 (see FIG. 5A). The first shaft holder 113 supports a base end-side portion of the shift select shaft 15. The second shaft holder 114 accommodates and supports the distal end portion of the shift select shaft 15.

The inner side surface of the first side wall 111 is a first inner wall surface 111A (see FIG. 5A) formed of a flat surface. The inner side surface of the second side wall 112 is a second inner wall surface 112A (see FIG. 5A) formed of a flat surface. The second inner wall surface 112A faces the first inner wall surface 111A, and is parallel to the first inner wall surface 111A. The first shaft holder 113 is formed so as to protrude outward from the outer wall surface (surface on the opposite side of the first side wall 111 from the first inner wall surface 111A) of the first side wall 111, and is formed in, for example, a cylindrical shape. The first shaft holder 113 is integrally formed with the first side wall 111. An insertion hole 104 having a circular cross section is formed in the first shaft holder 113 and the first side wall 111. The insertion hole 104 extends through the first shaft holder 113 and the first side wall 111 in their thickness direction (up-down direction in FIG. 5A). The shift select shaft 15 is passed through the insertion hole 104.

A first plain bearing 101 (see FIG. 5A) is fixedly fitted onto the inner peripheral wall of the insertion hole 104. The first plain bearing 101 surrounds the outer periphery of a middle portion of the shift select shaft 15 (a portion slightly closer to the based end than the distal end portion) that is passed through the insertion hole 104, and supports the outer periphery of the middle portion of the shift select shaft 15 so as to be in sliding contact with the outer periphery of the middle portion. The second shaft holder 114 is formed so as to protrude outward from the outer wall surface (surface on the opposite side of the second side wall 112 from the second inner wall surface 112A) of the second side wall 112, and is formed in, for example, a substantially cylindrical shape. The second shaft holder 114 is integrally formed with the second side wall 112. A columnar distal end portion accommodating groove 115 (see FIG. 5A) is defined by the inner periphery and the bottom face of the second shaft holder 114. The distal end portion accommodating groove 115 accommodates the distal end portion (lower end portion in FIG. 5A) of the shift select shaft 15. The inner peripheral wall of the distal end portion accommodating groove 115 is formed in a cylindrical shape having a central axis coaxial with the cylindrical insertion hole 104.

A second plain bearing 102 (see FIG. 5A) is fixedly fitted onto the inner peripheral wall of the distal end portion accommodating groove 115. The second plain bearing 102 surrounds the outer periphery of the distal end portion of the shift select shaft 15 accommodated in the distal end portion accommodating groove 115, and supports the outer periphery of the distal end portion so as to be in sliding contact with the outer periphery of the distal end portion. The shift select shaft 15 is supported by the first plain bearing 101 and the second plain bearing 102 so as to be rotatable around its central axis 17 and movable in the axial directions M11, M12.

A seal member 103 is provided at a portion on the outer side of the first plain bearing 101 in the insertion hole 104 to seal the clearance between the inner peripheral wall of the insertion hole 104 and the outer periphery of the shift select shaft 15 so that dust or dirt does not enter the housing 22 (main housing 22A). A lock pole 106 is arranged in the first shaft holder 113, at a position between the seal member 103 and the first plain bearing 101 in the thickness direction (up-down direction in FIG. 5A). Specifically, the lock pole 106 is accommodated in a through-hole 105 that extends from the inner peripheral wall of the insertion hole 104 to the outer periphery of the first shaft holder 113. The lock pole 106 extends in a direction perpendicular to the central axis of the columnar distal end portion accommodating groove 115 (that is, the central axis 17 of the shift select shaft 15) (perpendicular direction), has a substantially cylindrical shape, and is provided so as to be movable along the above-described direction (perpendicular direction). The distal end portion of the lock pole 106 has a semi-spherical shape, and is engaged with one of engaging grooves 107 described below.

A plurality of (for example, three) engaging grooves 107 is formed on the outer periphery of the shift select shaft 15 at intervals in the axial directions M11, M12 so as to extend in the circumferential direction of the shift select shaft 15. Each engaging groove 107 is formed all around the shift select shaft 15. As the lock pole 106 moves in its longitudinal direction, the distal end portion protrudes toward the central axis 17 (rightward in FIG. 5A) beyond the inner peripheral wall of the insertion hole 104 to be engaged with one of the engaging grooves 107. In this way, the lock pole 106 prohibits movement of the shift select shaft 15 in the axial directions M11, M12. As a result, the shift select shaft 15 is held with a constant force with the movement in the axial directions M11, M12 prohibited.

In a portion of the outer periphery of the shift select shaft 15 between a portion which is in sliding contact with the first plain bearing 101 and a portion which is in sliding contact with the second plain bearing 102, external splines 121 (see FIG. 5A) and a rack 122 (described later) (see FIG. 5A) are formed in this order from the first plain bearing 101 side. A pinion 36 is in mesh with the rack 122. As shown in FIG. 4, the interrupting unit 26 includes a transmission shaft 41, a first rotor 42, a second rotor 44 and a clutch mechanism 39. The transmission shaft 41 is coaxially coupled to the output shaft 40 of the electric motor 23. The first rotor 42 is provided coaxially with the transmission shaft 41 so as to be rotatable together with the transmission shaft 41. The second rotor 44 is provided coaxially with the transmission shaft 41 so as to be rotatable together with the transmission shaft 41. The clutch mechanism 39 switches the element, to which the transmission shaft 41 is coupled, between the first rotor 42 and the second rotor 44.

The transmission shaft 41 includes a small-diameter main shaft portion 46 and a large-diameter portion 47. The main shaft portion 46 is provided on the electric motor 23 side. The large-diameter portion 47 is provided integrally with the main shaft portion 46, at an axial end portion (right end portion in FIG. 4), on the first rotor 42 side, of the main shaft portion 46, and is larger in diameter than the main shaft portion 46. The first rotor 42 is arranged on the opposite side of the transmission shaft 41 from the electric motor 23. The first rotor 42 has a first armature hub 54 that projects radially outward from the outer periphery of the axial end portion (left end portion in FIG. 4) on the electric motor 23 side. The first armature hub 54 is arranged so as to face the surface (right surface in FIG. 4) of the large-diameter portion 47, which is on the opposite side of the large-diameter portion 47 from the electric motor 23.

The second rotor 44 is arranged on the opposite side of the large-diameter portion 47 of the transmission shaft 41 from the first rotor 42, that is, arranged on the electric motor 23 side. The second rotor 44 surrounds the main shaft portion 46 of the transmission shaft 41. The second rotor 44 has a second armature hub 55 that projects radially outward from the outer periphery of the axial end portion (right end portion in FIG. 4), which is on the opposite side of the second rotor 44 from the electric motor 23. The second armature hub 55 is arranged so as to face the surface (left surface in FIG. 4) of the large-diameter portion 47, which is on the electric motor 23 side. In other words, (the first armature hub 54 of) the first rotor 42 and (the second armature hub 55 of) the second rotor 44 are arranged so as to sandwich the large-diameter portion 47 of the transmission shaft 41 therebetween.

The clutch mechanism 39 includes a shift electromagnetic clutch 43 and a select electromagnetic clutch (second clutch) 45. The shift electromagnetic clutch 43 is connected to or disconnected from the first rotor 42 to couple or remove the transmission shaft 41 to or from the first rotor 42. The select electromagnetic clutch 45 is connected to or disconnected from the second rotor 44 to couple or remove the transmission shaft 41 to or from the second rotor 44. The shift electromagnetic clutch 43 includes a first field 48 and a first armature 49. The first armature 49 is arranged on the other axial side face (right surface in FIG. 4) of the large-diameter portion 47 of the transmission shaft 41 with a small clearance left between the first armature 49 and the surface, on the electric motor 23 side (left surface in FIG. 4), of the first armature hub 54, and is formed in a substantially annular plate shape. The first armature 49 is made of a ferromagnetic material, such as iron. The first field 48, in which a first electromagnetic coil 50 is incorporated in the yoke, is fixed to the housing 22.

The select electromagnetic clutch 45 includes a second field 51 and a second armature 52. The second armature 52 is arranged on one axial side face (left surface in FIG. 4) of the large-diameter portion 47 of the transmission shaft 41 with a small clearance left between the second armature 52 and the surface (right surface in FIG. 4) of the second armature hub 55, which is on the opposite side of the second armature hub 55 from the electric motor 23, and is formed in a substantially annular plate shape. The second armature 52 is made of a ferromagnetic material, such as iron. The second field 51, in which a second electromagnetic coil 53 is incorporated in the yoke, is fixed to the housing 22. The first field 48 and the second field 51 are arranged next to each other along the axial direction such that the large-diameter portion 47, the first armature hub 54 and the second armature hub 55 are interposed between the first field 48 and the second field 51.

A clutch driving circuit (not shown) used to drive the shift electromagnetic clutch 43 and the select electromagnetic clutch 45 is connected thereto. The clutch driving circuit is supplied with voltage (supplied with electric power) from a power supply (for example, 24 V, not shown) via, for example, wiring. The clutch driving circuit is configured to include a relay circuit, and the like. The clutch driving circuit is provided so as to be able to individually supply electric power or stop supply of electric power to the shift electromagnetic clutch 43 and the select electromagnetic clutch 45. Note that the configuration of the clutch driving circuit is not limited to the configuration for driving both the shift electromagnetic clutch 43 and the select electromagnetic clutch 45. Alternatively, a clutch driving circuit for driving the shift electromagnetic clutch 43 and a clutch driving circuit for driving the select electromagnetic clutch 45 may be separately provided.

As the first electromagnetic coil 50 is energized by supplying electric power to the shift electromagnetic clutch 43 via the clutch driving circuit, the first electromagnetic coil 50 is placed in an excited state. Thus, electromagnetic attraction force is generated in the first field 48 that includes the first electromagnetic coil 50. Then, the first armature 49 is attracted to the first field 48 to be deformed toward the first field 48 As a result, the first armature 49 frictionally contacts the first armature hub 54. Thus, as the first electromagnetic coil 50 is energized, the first electromagnetic coil 50 is connected (coupled) to the first rotor 42, and the transmission shaft 41 is coupled to the first rotor 42. Then, supply of voltage to the first electromagnetic coil 50 is stopped and current does not flow through the first electromagnetic coil 50. Thus, attraction force for attracting the first armature 49 is no longer generated, so the first armature 49 returns to an original shape. Thus, the first electromagnetic coil 50 separates from the first rotor 42, and the transmission shaft 41 is removed from the first rotor 42. That is, by switching the state of power supply to the first electromagnetic coil 50 between the power supply state and the power supply stopped state, it is possible to allow or interrupt transmission of rotary torque from the electric motor 23 to the first rotor 42.

On the other hand, as the second electromagnetic coil 53 is energized by supplying electric power to the select electromagnetic clutch 45 via the clutch driving circuit, the second electromagnetic coil 53 is placed in an excited state. Thus, electromagnetic attraction force is generated in the second field 51 that includes the second electromagnetic coil 53. Then, the second armature 52 is attracted to the second field 51 to be deformed toward the second field 51. As a result, the second armature 52 frictionally contacts the second armature hub 55. Thus, as the second electromagnetic coil 53 is energized, the second electromagnetic coil 53 is connected (coupled) to the second rotor 44, and the transmission shaft 41 is coupled to the second rotor 44. Then, supply of voltage to the second electromagnetic coil 53 is stopped and current does not flow through the second electromagnetic coil 53. Thus, attraction force for attracting the second armature 52 is no longer generated, and the second armature 52 returns to an original shape. Thus, the second electromagnetic coil 53 separates from the second rotor 44, and the transmission shaft 41 is removed from the second rotor 44. That is, by switching the state of power supply to the second electromagnetic coil 53 between the power supply state and the power supply stopped state, it is possible to allow or interrupt transmission of rotary torque from the electric motor 23 to the second rotor 44.

An annular small-diameter first gear 56 is fixedly fitted onto the outer periphery of the second rotor 44. The first gear 56 is provided coaxially with the second rotor 44. The first gear 56 is supported by a rolling bearing 57. An outer ring of the rolling bearing 57 is fixedly fitted onto the inner periphery of the first gear 56. An inner ring of the rolling bearing 57 is fixedly fitted onto the outer periphery of the main shaft portion 46 of the transmission shaft 41. The shift conversion mechanism 24 includes a ball screw mechanism 58 and an arm 60. The ball screw mechanism 58 serves as a speed reducer and converts a rotational motion into a linear motion. The arm 60 pivots about the central axis 17 of the shift select shaft 15 as a nut 59 of the ball screw mechanism 58 moves in the axial direction.

The ball screw mechanism 58 includes a screw shaft 61 and the nut 59. The screw shaft 61 extends coaxially with the first rotor 42 (or coaxially with the transmission shaft 41). The nut 59 is screwed to the screw shaft 61 via balls (not shown). The screw shaft 61 is arranged so as to be neither parallel to nor intersecting with the shift select shaft 15 such that, when viewed from above, the screw shaft 61 and the shift select shaft 15 form an angle of 90°. In other words, when viewed from a direction perpendicular to both the axial direction of the screw shaft 61 and the axial directions M11, M12 of the shift select shaft 15, the screw shaft 61 and the shift select shaft 15 are perpendicular to each other.

The screw shaft 61 is supported by rolling bearings 64, 67 while movement of the screw shaft 61 in the axial direction is restricted. Specifically, one end portion (left end portion in FIG. 4) of the screw shaft 61 is supported by the rolling bearing 64, and the other end portion (right end portion in FIG. 4) of the screw shaft 61 is supported by the rolling bearing 67. The screw shaft 61 is supported by the rolling bearings 64, 67 so as to be rotatable about its central axis 80.

An inner ring of the rolling bearing 64 is fixedly fitted onto one end portion of the screw shaft 61. In addition, an outer ring of the rolling bearing 64 is fitted into a through-hole that passes through a bottom wall 65 of the casing of the interrupting unit 26 fixed to the housing 22, so as to extend from the inner surface to the outer surface of the bottom wall 65. In addition, a lock nut 66 is engaged with the outer ring of the rolling bearing 64 to restrict movement of rolling bearing 64 toward the other side (right side in FIG. 4) in the axial direction of the screw shaft 61. A part of one end portion of the screw shaft 61, which is on the electric motor 23 side (left side in FIG. 4) with respect to the rolling bearing 64, is passed through the inner periphery of the first rotor 42, and is coupled to the first rotor 42 so as to be rotatable together with the first rotor 42. The outer ring of the rolling bearing 67 is fixed to the housing 22.

Columnar protruding shafts 70 (only one of them is shown in FIG. 4; see also FIG. 5A) are respectively formed to extend from one side surface (side surface closer to the reader in the direction perpendicular to the sheet on which FIG. 4 is drawn; the lower side surface in FIG. 5A) of the nut 59 and the other side surface (side surface farther from the reader in the direction perpendicular to the sheet on which FIG. 4 is drawn; the upper side surface in FIG. 5A) that is on the opposite side of the nut 59 from the one side surface. The protruding shafts 70 each extend in the direction along the axial directions M11, M12 of the shift select shaft 15 (direction perpendicular to the sheet on which FIG. 4 is drawn; the up-down direction in FIG. 5A). The protruding shafts 70 are coaxial with each other. Rotation of the nut 59 around the screw shaft 61 is restricted by a first engaging portion 72 of the arm 60. Therefore, as the screw shaft 61 is rotated, the nut 59 moves in the axial direction of the screw shaft 61 in accordance with the rotation of the screw shaft 61. Note that FIG. 5A shows a sectional state where the nut 59 is located at a position that is deviated from the position of the nut 59 shown in FIG. 4 in a direction away from the first rotor 42 (rightward in FIG. 4) along the axial direction of the screw shaft 61.

The arm 60 includes the first engaging portion 72, a second engaging portion 73 (see FIG. 5A) and a linear connecting rod 74. The first engaging portion 72 is engaged with the nut 59. The second engaging portion 73 is spline-fitted to the shift select shaft 15. The connecting rod 74 connects the first engaging portion 72 to the second engaging portion 73. The connecting rod 74 has, for example, a rectangular shape in cross section over its entire length. The second engaging portion 73 has a substantially cylindrical shape, and is fitted onto the shift select shaft 15.

The first engaging portion 72 has a pair of support plate portions 76 and a coupling plate portion 77. The first engaging portion 72 has a substantially U-shape in side view. The support plate portions 76 face each other. The coupling plate portion 77 couples the base end sides (lower end sides shown in FIG. 4 and right end sides shown in FIG. 5A) of the support plate portions 76. Each support plate portion 76 has a U-shaped engaging groove 78. The U-shaped engaging groove 78 is engaged with the outer periphery of a corresponding one of the protruding shafts 70 while allowing rotation of the corresponding one of the protruding shafts 70. Each U-shaped engaging groove 78 is a cutout that extends from the distal end side that is on the opposite side of the first engaging portion 72 from the base end side. Therefore, the first engaging portion 72 is engaged with the nut 59 so as to be rotatable relative to the nut 59 around the protruding shafts 70 and movable together with the nut 59 in the axial direction of the screw shaft 61. In addition, due to engagement of each U-shaped engaging groove 78 and a corresponding one of the protruding shafts 70, rotation of the nut 59 around the screw shaft 61 is restricted by the first engaging portion 72 of the arm 60. Therefore, in accordance with the rotation of the screw shaft 61, the nut 59 and the first engaging portion 72 move in the axial direction of the screw shaft 61. The second engaging portion 73 has, for example, an annular plate shape. Alternatively, the second engaging portion 73 may have a cylindrical shape.

The outer periphery of the shift select shaft 15 is spline-fitted to the inner periphery of the second engaging portion 73. Specifically, external splines 121 formed on the outer periphery of the shift select shaft 15 are in mesh with internal splines 75 formed in the inner periphery of the second engaging portion 73. At this time, a clearance for meshing is formed between the external splines 121 and the internal splines 75. In other words, the second engaging portion 73 is coupled to the outer periphery of the shift select shaft 15 so as to be non-rotatable relative to the shift select shaft 15 and movable relative to the shift select shaft 15 in the axial direction. Therefore, as the screw shaft 61 rotates and, accordingly, the nut 59 moves in the axial direction of the screw shaft 61, the arm 60 pivots about the central axis 17 of the shift select shaft 15, and the shift select shaft 15 rotates in accordance with the pivot motion of the arm 60.

The select conversion mechanism 25 includes the first gear 56, a pinion shaft 95, a second gear 81 and the small-diameter pinion 36. The select conversion mechanism 25 constitutes a speed reducer as a whole. The pinion shaft 95 extends parallel to the transmission shaft 41, and is provided so as to be rotatable. The second gear 81 is coaxially fixed to the pinion shaft 95 at a predetermined position close to one end portion (left end portion in FIG. 4) of the pinion shaft 95. The small-diameter pinion 36 is coaxially fixed to the pinion shaft 95 at a predetermined position close to the other end portion (right end portion in FIG. 4) of the pinion shaft 95. Note that the second gear 81 is formed to be larger in diameter than both the first gear 56 and the pinion 36.

One end portion (left end portion in FIG. 4) of the pinion shaft 95 is supported by a rolling bearing 96 fixed to the housing 22. An inner ring of the rolling bearing 96 is fixedly fitted onto one end portion (left end portion in FIG. 4) of the pinion shaft 95. In addition, the outer ring of the rolling bearing 96 is fixed in a cylindrical recess 97 formed on the inner surface of the lid 27. In addition, the other end portion (right end portion in FIG. 4) of the pinion shaft 95 is supported by a rolling bearing 84. The pinion 36 and the rack 122 are in mesh with each other through rack-and-pinion. With this configuration, as the pinion shaft 95 rotates in accordance with the rotation of the transmission shaft 41, the shift select shaft 15 moves in the axial directions M11, M12 accordingly.

A first rotation angle sensor 87 is arranged at the other end portion of the pinion shaft 95. The first rotation angle sensor 87 is used to detect the rotation angle of the pinion shaft 95. A sensor hole 85 is formed in the bottom wall (the wall on the opposite side of the housing 22 from the lid 27; right wall in FIG. 4) of the housing 22, and passes through the bottom wall from the inner face to the outer face. The first rotation angle sensor 87 includes a sensor portion (not shown) and a first sensor shaft 99 that is coupled to the sensor portion. The distal end portion of the first sensor shaft 99 is coupled to a distal end portion (right end portion in FIG. 4) 82 of the pinion shaft 95 through the sensor hole 85 so as to be rotatable together with the pinion shaft 95. The first rotation angle sensor 87 calculates the rotation angle of the pinion shaft 95 on the basis of the rotation angle of the first sensor shaft 99 that rotates in accordance with the rotation of the pinion shaft 95. It is possible to obtain the axial position of the shift select shaft 15 based on the detection result output from the first rotation angle sensor 87. The detection result from the first rotation angle sensor 87 is input into an electronic control unit (ECU) 88 (described below).

In addition, a second rotation angle sensor 89 for detecting the rotation angle of the shift select shaft 15 is provided in the housing 22. The second rotation angle sensor 89 includes a body 90, a second sensor shaft 94 and a sector gear 91. A sensor portion (not shown) is incorporated in the body 90. The second sensor shaft 94 is coupled to the sensor portion. The sector gear 91 is fixedly fitted onto the second sensor shaft 94. The sector gear 91 is in mesh with a sensor gear 92 that is provided so as to be rotatable together with (fixedly fitted onto) the shift select shaft 15. The second rotation angle sensor 89 calculates the rotation angle of the shift select shaft 15 on the basis of the rotation angle of the second sensor shaft 94 that rotates in accordance with the rotation of the shift select shaft 15. A detection result output from the second rotation angle sensor 89 is input into the ECU 88 (described below).

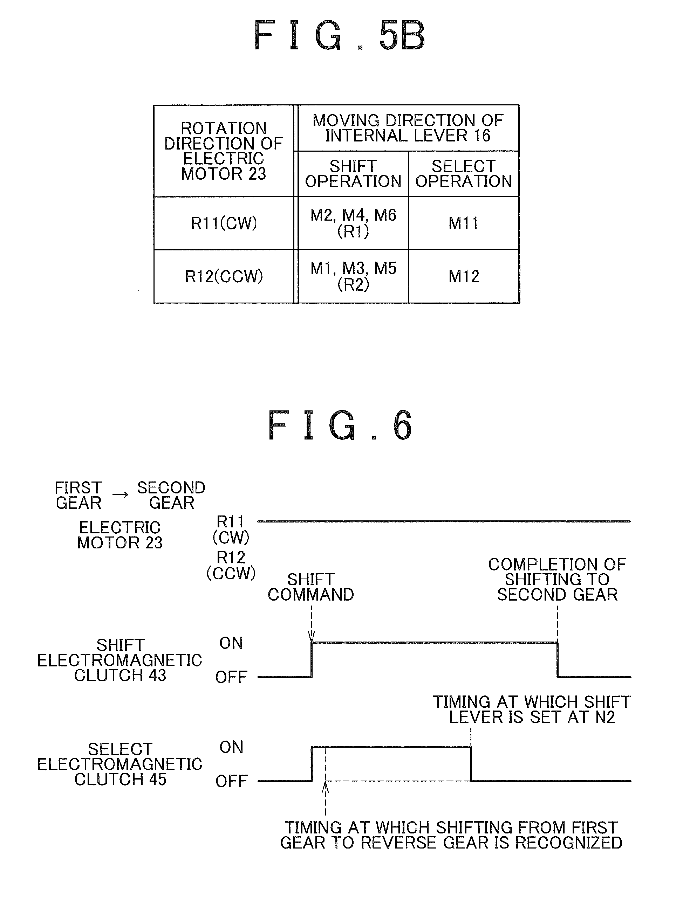

The ECU 88 executes drive control over the electric motor 23 via an electric motor driver (not shown). In addition, the ECU 88 executes drive control over the shift electromagnetic clutch 43 and the select electromagnetic clutch 45 via a relay circuit (not shown). Note that the ECU 88 may be accommodated in the gear housing 7. FIG. 5B is a table that shows the relationship between the rotation direction of the electric motor 23 and the moving direction of the internal lever 16.

As shown in FIG. 1, FIG. 4 and FIG. 5B, when the electric motor 23 is rotating in the first rotation direction R11 (see FIG. 4) while the shift electromagnetic clutch 43 is in the engaged state, the screw shaft 61 rotates in the rotation direction R21 about the central axis 80. Then, the shift select shaft 15 rotates in the first rotation direction R1. Through the rotation of the shift select shaft 15, the internal lever 16 rotates around the shift select shaft 15. Thus, one of the fork shafts 10A, 10B, 10C (see FIG. 1), coupled to the internal lever 16, axially moves in a corresponding one of the axial directions M2, M4, M6 (see FIG. 1).

On the other hand, when the electric motor 23 is rotating in the second rotation direction R12 (see FIG. 4) while the shift electromagnetic clutch 43 is the engaged state, the screw shaft 61 rotates in the rotation direction R22 (see FIG. 4) about the central axis 80. Then, the shift select shaft 15 rotates in the second rotation direction R2 (see FIG. 1). Through the rotation of the shift select shaft 15, the internal lever 16 rotates about the shift select shaft 15. Thus, one of the fork shafts 10A, 10B, 10C, coupled to the internal lever 16, axially moves in a corresponding one of the axial directions M1, M3, M5 (see FIG. 1).

In addition, in the present embodiment, when the electric motor 23 is rotating in the first rotation direction R11 while the select electromagnetic clutch 45 is the engaged state, the pinion shaft 95 rotates in a rotation direction R31 (see FIG. 4), and the shift select shaft 15 moves in the axial direction M11. With the movement of the shift select shaft 15 in the axial direction M11, the internal lever 16 moves in the axial direction M11. Thus, one of the fork shafts 10B, 10C, which is engaged with the internal lever 16, is selected.

On the other hand, when the electric motor 23 is rotating in the second rotation direction R12 while the select electromagnetic clutch 45 is in the engaged state, the pinion shaft 95 rotates in a rotation direction R32 (see FIG. 4), and the shift select shaft 15 moves in the axial direction M12. With the movement of the shift select shaft 15 in the axial direction M12, the internal lever 16 moves in the axial direction M12. Thus, one of the fork shafts 10A and 10B, which is engaged with the internal lever 16, is selected.

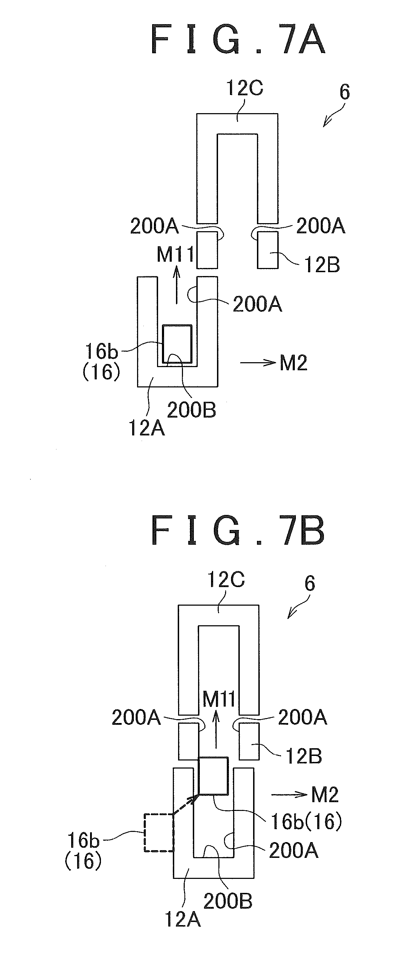

The feature of the present embodiment is the shift control process in the case of a gear shift between Mth-gear and Nth-gear (upshift and downshift). Hereinafter, first gear and second gear will be described as an example of the combination of Mth-gear and Nth-gear, and description will be made on an example of the shift control process for upshifting from first gear to second gear (that is, "Mth-gear" is first gear and "Nth-gear" is second gear). FIG. 6 is a timing chart for illustrating an example of the shift control process for upshifting from first gear to second gear. FIG. 7A to FIG. 7D are views that show states of engagement between the internal lever 16 and the fork heads 12A, 12B, 12C in the case of upshifting from first gear to second gear. FIG. 6 shows changes in the rotation direction of the electric motor 23 and the on/off states of the shift electromagnetic clutch 43 and the select electromagnetic clutch 45.

In shift control for upshifting from first gear to second gear, the internal lever 16 is caused to perform a shift operation and a select operation at the same time. The distal end portion 16b of the internal lever 16 at the first-gear shift position is moved from the first-gear shift position to the second neutral position N2, as the second-gear neutral position, along an oblique linear path (along an oblique direction that is a resultant of the first and third directions) that connects the first-gear shift position to the second neutral position N2, as the second-gear neutral position. After reaching the second neutral position N2, the distal end portion 16b is caused to perform only a shift operation and is moved to the second-gear shift position. Hereinafter, detailed description will be provided.

As shown in FIG. 6 and FIG. 7A, in shift control process for upshifting from first gear to second gear, the electric motor 23 is rotated in the first rotation direction R11. Then, at the timing at which upshifting from first gear to second gear should be performed (when a shift command is issued from the ECU 88), the shift electromagnetic clutch 43 is turned on, and the select electromagnetic clutch 45 is turned on. In this case, the shift electromagnetic clutch 43 and the select electromagnetic clutch 45 are simultaneously turned on. As a result, the transmission shaft 41 is coupled to the first rotor 42, and the transmission shaft 41 is coupled to the second rotor 44. Thus, rotary torque from the electric motor 23 is input into both the first rotor 42 and the second rotor 44. In other words, rotary torque from the electric motor 23 is input to both the shift conversion mechanism 24 and the select conversion mechanism 25.

In this case, the shift select shaft 15 is rotated in the first rotation direction R1, and the shift select shaft 15 is axially moved in the first axial direction M11. Thus, the distal end portion 16b of the internal lever 16 at the first-gear shift position is moved along an oblique line in a direction that is a resultant of the axial direction M2 (first direction) and the first axial direction M11 (third direction) (a resultant of the direction of the outline arrow ER and the direction of the outline arrow D1 in FIG. 2A) (see FIG. 7B). Even after the distal end portion 16b of the internal lever 16 starts to be engaged with the fork head 12B (see FIG. 7B), the distal end portion 16b is moved along the oblique line in the direction that is the resultant of the axial direction M2 and the first axial direction M11 (see FIG. 7B).

The ECU 88 includes a current driving unit that is used to execute current control over the select electromagnetic clutch 45. The current driving unit includes a target determination value determining unit (driving current value determining means), an output current control unit and the clutch driving circuit. The target determination value determining unit determines the driving current value of the second electromagnetic coil 53 (target value of current supplied to the coil 53). The output current control unit controls output current. The clutch driving circuit drives the select electromagnetic clutch 45. A current value of current that is supplied to the clutch driving circuit is fed back, and is controlled by the output current control unit such that the supplied current coincides with the target value.

The value of control current (target value of supplied current) is set to a relatively low predetermined value. Therefore, when the internal lever 16 that is moving in the select direction contacts the side face (right face in FIG. 2A) of the fork head 12B with a high impact, it is possible to slide the select electromagnetic clutch 45. Thus, it is possible to prevent damage to the internal lever 16 or the fork head 12B.

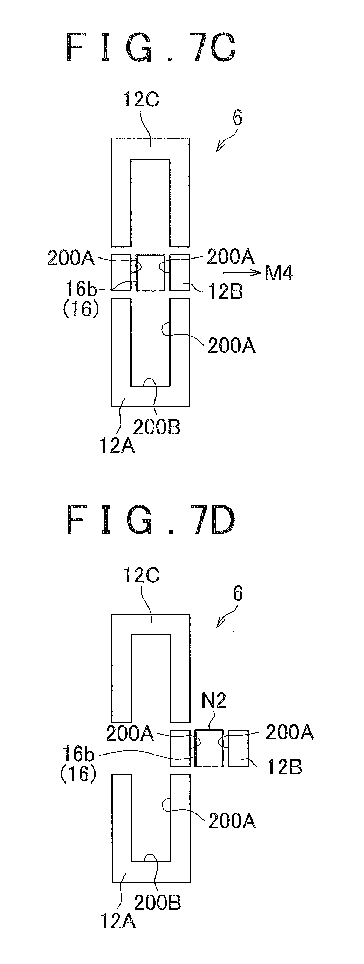

In addition, the rotation speed of the electric motor 23, the speed reducing ratios of the conversion mechanisms 24, 25 that are speed reducers, and the like, are set such that the distal end portion 16b reaches the second neutral position N2 at the timing at which the distal end portion 16b is removed from the fork head 12A. The distal end portion 16b is removed from the fork head 12A and is engaged with the fork head 12B (see FIG. 7C), and then the distal end portion 16b reaches the second neutral position N2.

When the distal end portion 16b reaches the second neutral position N2, the select electromagnetic clutch 45 is turned off. Thus, axial movement of the distal end portion 16b is stopped, but the rotation of the electric motor 23 is continuing and the shift electromagnetic clutch 43 is kept on. Therefore, the shift motion of the distal end portion 16b is continued. When the distal end portion 16b has reached the second neutral position N2, the distal end portion 16b of the internal lever 16 is moved in the axial direction M4 while being engaged only with the fork head 12B (see FIG. 7C). After that, when the distal end portion 16b reaches the second-gear shift position (see FIG. 7D), the shift electromagnetic clutch 43 is turned off. Note that "the electromagnetic clutch 43 (electromagnetic clutch 45) is on" indicates that voltage (for example, 24 V) is being supplied to the shift electromagnetic clutch 43 (the select electromagnetic clutch 45). Note that "the electromagnetic clutch 43 (electromagnetic clutch 45) is off' indicates that supply of voltage to the shift electromagnetic clutch 43 (the select electromagnetic clutch 45) is stopped.

The electric actuator 21 drives the two driving mechanisms (the shift and select conversion mechanisms 24, 25) with the use of the power of the single electric motor 23, and allows or interrupts the power transmission with the use of the shift electromagnetic clutch 43 and the select electromagnetic clutch 45. In shift control process for shifting from first gear to second gear, switching control for, when one of the shift electromagnetic clutch 43 and the select electromagnetic clutch 45 is on, keeping the other one of the shift electromagnetic clutch 43 and the select electromagnetic clutch 45 off. Specifically, after the distal end portion 16b is moved from the first-gear shift position to the first neutral position N1 as the first-gear neutral position, the shift electromagnetic clutch 43 is turned off, and then the select electromagnetic clutch 45 is turned on for select operation. Then, after the distal end portion 16b is moved (select operation) from the first neutral position N1 to the second neutral position N2, the select electromagnetic clutch 45 is turned off, and then the shift electromagnetic clutch 43 is turned on in order to move the distal end portion 16b to the second-gear shift position.

In contrast to this, in shift control for upshifting from first gear to second gear in the transmission actuating device 3 according to the embodiment of the invention, both the shift electromagnetic clutch 43 and the select electromagnetic clutch 45 are turned on. Thus, the distal end portion 16b of the internal lever 16 moves from the first-gear shift position to the second neutral position N2 as the second-gear neutral position, in the direction along the oblique line that connects the first-gear shift position to the second neutral position N2. Thus, it is possible to reduce the moving distance when the distal end portion 16b of the internal lever 16 is moved from the first-gear shift position to the second neutral position N2. Thus, it is possible to perform shift operation from first gear to second gear in a short time. As a result, it is possible to reduce a shifting time required to shift from first gear to second gear.

After the distal end portion 16b of the internal lever 16 has reached the second neutral position N2, only the shift electromagnetic clutch 43 is on, and the select electromagnetic clutch 45 is off. Therefore, it is possible to cause the internal lever 16 to smoothly perform a shift operation from the second neutral position N2 to the second-gear shift position.

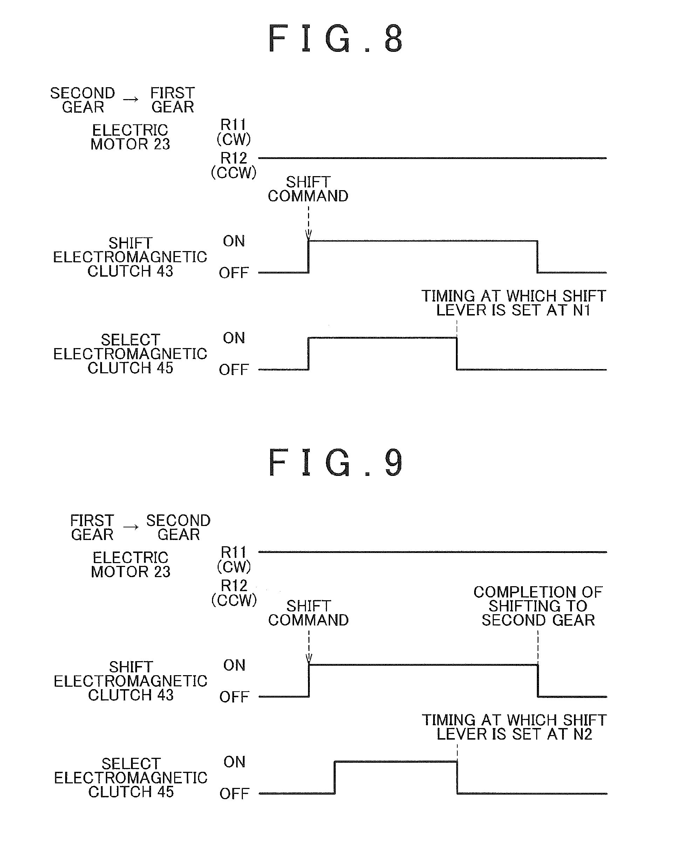

Next, description will be made on a case where downshifting from second gear to first gear is performed (that is, "Mth-gear" is first gear and "Nth-gear" is second gear). FIG. 8 is a timing chart for illustrating an example of a shift control process for downshifting from second gear to first gear. FIG. 8 shows changes in the rotation direction of the electric motor 23 and the on/off state of the shift electromagnetic clutch 43 and the select electromagnetic clutch 45, as well as FIG. 6. As shown in FIG. 2A and FIG. 8, in shift control for downshifting from second gear to first gear, the internal lever 16 is caused to perform a shift operation and a select operation at the same time. Then, the distal end portion 16b of the internal lever 16 at the second-gear shift position is moved from the second-gear shift position to the first neutral position N1 as the first-gear neutral position, along an oblique linear path (along an oblique direction that is a resultant of the second and fourth directions) that connects the second-gear shift position to the first neutral position N1 as the first-gear neutral position. After reaching the first neutral position N1, the distal end portion 16b is caused to perform only a shift operation, and is moved to the first-gear shift position. Hereinafter, detailed description will be provided.

As shown in FIG. 2A and FIG. 8, in a shift control process for downshifting from second gear to first gear, the electric motor 23 is rotated in the second rotation direction R12. Then, at the timing at which downshifting from second gear to first gear should be performed (when a shift command is issued from the ECU 88), the shift electromagnetic clutch 43 is turned on, and the select electromagnetic clutch 45 is turned on. In this case, the shift electromagnetic clutch 43 and the select electromagnetic clutch 45 are simultaneously turned on. Thus, the transmission shaft 41 is coupled to the first rotor 42, and the transmission shaft 41 is coupled to the second rotor 44. Therefore, rotary torque from the electric motor 23 is input into both the first rotor 42 and the second rotor 44. In other words, rotary torque from the electric motor 23 is input into both the shift conversion mechanism 24 and the select conversion mechanism 25.

In this case, the shift select shaft 15 is rotated in the second rotation direction R2, and the shift select shaft 15 is axially moved in the second axial direction M12. Thus, the distal end portion 16b of the internal lever 16 at the second-gear shift position is moved along an oblique line in a direction that is a resultant of the axial direction M3 (second direction) and the second axial direction M12 (fourth direction) (a resultant of the direction of the outline arrow E1 and the direction of the outline arrow D2 in FIG. 2A). Even after the distal end portion 16b of the internal lever 16 starts to be engaged with the fork head 12A, the distal end portion 16b is moved in the oblique line direction that is a resultant of the axial direction M3 and the second axial direction M12.

The value of control current (target value of supplied current), controlled by the output current control unit that drives the select electromagnetic clutch 45, is set to a relatively low predetermined value. Therefore, when the internal lever 16 moving in the select direction contacts the side face (left face in FIG. 2A) of the fork head 12B with a high impact, it is possible to slide the select electromagnetic clutch 45. As a result, it is possible to prevent damage to the internal lever 16 or the fork head 12B.

In addition, the rotation speed of the electric motor 23, the speed reducing ratios of the conversion mechanisms 24, 25 that are speed reducers, and the like, are set such that the distal end portion 16b reaches the first neutral position N1 at the timing at which the distal end portion 16b is removed from the fork head 12B. The distal end portion 16b is removed from the fork head 12B and is engaged with the fork head 12A, and then the distal end portion 16b reaches the first neutral position N1.

When the distal end portion 16b reaches the first neutral position N1, the select electromagnetic clutch 45 is turned off. Thus, axial movement of the distal end portion 16b is stopped, but the rotation of the electric motor 23 is continuing and the shift electromagnetic clutch 43 is kept on. Therefore, the shift motion of the distal end portion 16b is continued. When the distal end portion 16b has reached the first neutral position N1, the distal end portion 16b of the internal lever 16 is moved in the axial direction M1 while being engaged only with the fork head 12A. After that, when the distal end portion 16b reaches the first-gear shift position, the shift electromagnetic clutch 43 is turned off.

In shift control for downshifting from second gear to first gear in the transmission actuating device 3, both the shift electromagnetic clutch 43 and the select electromagnetic clutch 45 are turned on. Therefore, the distal end portion 16b of the internal lever 16 moves from the second-gear shift position to the first neutral position N1 as the first-gear neutral position, in the direction of the oblique line that connects the second-gear shift position to the first neutral position N1. Thus, it is possible to reduce a moving distance when the distal end portion 16b of the internal lever 16 is moved from the second-gear shift position to the first neutral position N1. Thus, it is possible to perform a shift operation from second gear to first gear in a short time. As a result, it is possible to reduce a shifting time required to shift from second gear to first gear.

In addition, after the distal end portion 16b of the internal lever 16 has reached the first neutral position N1, only the shift electromagnetic clutch 43 is on, and the select electromagnetic clutch 45 is off. Thus, it is possible to cause the internal lever 16 to smoothly perform a shift operation from the first neutral position N1 to the first-gear shift position. Another example of the combination of Mth-gear and Nth-gear may be a combination of third gear and fourth gear (that is, "Mth-gear" is third gear and "Nth-gear" is fourth gear). That is, it is possible to also execute similar control in a shift control process for upshifting from third gear to fourth gear and a shift control process for downshifting from fourth gear to third gear.

Next, upshifting from second gear to third gear and upshifting from fourth gear to fifth gear will be described with reference to FIG. 2A. First, shifting from second gear to third gear will be described. In a state where the distal end portion 16b of the internal lever 16 is at the second-gear shift position, the electric actuator 21 is driven and the shift select shaft 15 is rotated in the second rotation direction R2. Thus, the internal lever 16 pivots about the shift select shaft 15, the fork head 12B and the fork shaft 10B are moved in the axial direction M3 (the direction of the outline arrow E3 in FIG. 2A), and the distal end portion 16b of the internal lever 16 is placed at the second neutral position N2. Subsequently, the electric actuator 21 is driven, and the shift select shaft 15 is further rotated in the second rotation direction R2. Thus, the internal lever 16 pivots about the shift select shaft 15, and the fork head 12B and the fork shaft 10B are moved in the axial direction M3 (the direction of the outline arrow E3 in FIG. 2A). The electric actuator 21 is continuously driven until the distal end portion 16b of the internal lever 16 reaches the third-gear shift position. As a result, shifting to third gear is achieved.

Next, shifting from fourth gear to fifth gear will be described. In a state where the distal end portion 16b of the internal lever 16 is at the fourth-gear shift position, the electric actuator 21 is driven, and the shift select shaft 15 is rotated in the second rotation direction R2. Thus, the internal lever 16 pivots about the shift select shaft 15, the fork head 12C and the fork shaft 10C are moved in the axial direction M5 (the direction of the outline arrow E5 in FIG. 2A), and the distal end portion 16b of the internal lever 16 is placed at the third neutral position N3. Subsequently, the electric actuator 21 is driven, and the shift select shaft 15 is further rotated in the second rotation direction R2. Thus, the internal lever 16 pivots about the shift select shaft 15, and the fork head 12C and the fork shaft 10C are moved in the axial direction M5 (the direction of the outline arrow E5 in FIG. 2A). The electric actuator 21 is continuously driven until the distal end portion 16b of the internal lever 16 reaches the fifth-gear shift position. As a result, shifting to fifth gear is achieved.

Next, downshifting from fifth gear to fourth gear and downshifting from third gear to second gear will be described with reference to FIG. 2A. First, shifting from fifth gear to fourth gear will be described. In a state where the distal end portion 16b of the internal lever 16 is at the fifth-gear shift position, the electric actuator 21 is driven, and the shift select shaft 15 is rotated in the first rotation direction R1. Thus, the internal lever 16 pivots about the shift select shaft 15, the fork head 12C and the fork shaft 10C are moved in the axial direction M6 (the direction of the outline arrow E4 in FIG. 2A), and the distal end portion 16b of the internal lever 16 is placed at the third neutral position N3. Subsequently, the electric actuator 21 is driven, and the shift select shaft 15 is further rotated in the first rotation direction R1. Thus, the internal lever 16 pivots about the shift select shaft 15, and the fork head 12C and the fork shaft 10C are moved in the axial direction M6 (the direction of the outline arrow E4 in FIG. 2A). The electric actuator 21 is continuously driven until the distal end portion 16b of the internal lever 16 reaches the fourth-gear shift position. As a result, shifting to fourth gear is achieved.

Next, shifting from third gear to second gear will be described. In a state where the distal end portion 16b of the internal lever 16 is at the third-gear shift position, the electric actuator 21 is driven, and the shift select shaft 15 is rotated in the first rotation direction R1. Thus, the internal lever 16 pivots about the central axis 17, the fork head 12B and the fork shaft 10B are moved in the axial direction M4 (the direction of the outline arrow E2 in FIG. 2A), and the distal end portion 16b of the internal lever 16 is placed at the second neutral position N2. Subsequently, the electric actuator 21 is driven, and the shift select shaft 15 is further rotated in the first rotation direction R1. Thus, the internal lever 16 pivots about the central axis 17, the fork head 12B and the fork shaft 10B are moved in the axial direction M4 (the direction of the outline arrow E2 in FIG. 2A). The electric actuator 21 is continuously driven until the distal end portion 16b of the internal lever 16 reaches the second-gear shift position. As a result, shifting to second gear is achieved.

The embodiment of the invention has been described above; however, the invention may be implemented in various other embodiments. For example, in a shift control process for upshifting from first gear to second gear, at the time of a start of a shift operation, if a signal indicating that the shift operation is not a shift operation from first gear to second gear (a signal indicating that the shift operation is a shift operation from first gear to reverse gear) is received after the shift electromagnetic clutch 43 and the select electromagnetic clutch 45 are simultaneously turned on, the select electromagnetic clutch 45 may be immediately turned off to cause the internal lever 16 to perform a shift operation for shifting from first gear to reverse gear. In addition, as shown in FIG. 9, in a shift control process for upshifting from first gear to second gear, at the time of a start of shift operation, the select electromagnetic clutch 45 may be turned on after the shift electromagnetic clutch 43 is turned on. In other words, after a shift command is received, the select electromagnetic clutch 45 may be turned on with a delay. Such a delay in an operation for turning on the select electromagnetic clutch 45 may be applied to the above-described upshifting from third gear to fourth gear, downshifting from second gear to first gear and downshifting from fourth gear to third gear.

In the above description, the above-described shift control in the electric actuator 21 is executed in both the shift control process for shifting between first gear and second gear and the shift control process for shifting between third gear and fourth gear. However, the invention is not limited to this configuration. The above-described shift control in the electric actuator 21 may be executed in only one of the shift control process for shifting between first gear and second gear and the shift control process for shifting between third gear and fourth gear. In the above description, the above-described change control is executed in both the shift control process for downshifting and the shift control process for upshifting. However, the invention is not limited to this configuration. The above-described change control may be executed in only one of the shift control process for downshifting and the shift control process for upshifting.

For example, another arrangement of the shift positions may be employed. In this case, the combination of Mth-gear and Nth-gear may be a combination other than the above-described combination of first gear and second gear and the above-described combination of third gear and fourth gear. The combination in this case may be, for example, a combination of second gear and third gear, a combination of fourth gear and fifth gear or a combination of first gear and reverse gear. In addition, the combination of Mth-gear and Nth-gear is not limited to combinations of adjacent gears, and may be, for example, a combination of first gear and third gear.

Other than the above, various design changes may be made within the scope of the matter recited in the claims.

## Claims

1. A transmission actuating device for actuating a transmission that includes a geared power transmission device, comprising:
a shift lever used to perform a shift operation of the power transmission device;
a single electric motor that is rotatable in a forward direction that is a first rotation direction and a reverse direction that is a second rotation direction;
a shift driving mechanism that causes the shift lever to move in a first direction along a predetermined shift direction to perform a shift operation upon receiving rotational driving force from the electric motor that is rotating in the first rotation direction, and that causes the shift lever to move in a second direction along the shift direction, the second direction being opposite to the first direction, to perform a shift operation upon receiving rotational driving force from the electric motor that is rotating in the second rotation direction;
a shift electromagnetic clutch that is able to allow or interrupt transmission of rotational driving force from the electric motor to the shift driving mechanism;
a select driving mechanism that causes the shift lever to move in a third direction along a select direction, which intersects with the shift direction, to perform a select operation upon receiving rotational driving force from the electric motor that is rotating in the first rotation direction, and that causes the shift lever to move in a fourth direction along the select direction, the fourth direction being opposite to the third direction, to perform a select operation upon receiving rotational driving force from the electric motor that is rotating in the second rotation direction; and
a select electromagnetic clutch that is able to allow or interrupt transmission of rotational driving force from the electric motor to the select driving mechanism, wherein
in order to shift from predetermined Mth-gear to predetermined Nth-gear in the transmission, the shift driving mechanism moves the shift lever in the first direction, and the select driving mechanism moves the shift lever in the third direction in order to shift from Mth-gear to Nth-gear, a shift direction position and a select direction position of the shift lever at Mth-gear being different from a shift direction position and a select direction position of the shift lever at Nth-gear, respectively,
the transmission actuating device further comprising,
a first control unit that executes, at the time of shifting from Mth-gear to Nth-gear, control to engage both the shift electromagnetic clutch and the select electromagnetic clutch during rotation of the electric motor while executing rotation control of the electric motor to cause the shift lever to move in an oblique direction that is a resultant of the first direction and the third direction.

2. The transmission actuating device according to claim 1, wherein
the first control unit includes a clutch engaging/disengaging unit that maintains both the shift electromagnetic clutch and the select electromagnetic clutch in an engaged state at least within a period until the shift lever reaches an Nth-gear neutral position, disengages the select electromagnetic clutch when the shift lever reaches the Nth-gear neutral position, and maintains the shift electromagnetic clutch in the engaged state after the select electromagnetic clutch is disengaged.

3. The transmission actuating device according to claim 1, wherein
a clutch engaging/disengaging unit engages the shift electromagnetic clutch and engages the select electromagnetic clutch at the same time.

4. The transmission actuating device according to claim 2, wherein
the clutch engaging/disengaging unit engages the shift electromagnetic clutch and engages the select electromagnetic clutch at the same time

5. The transmission actuating device according to claim 1, wherein
a clutch engaging/disengaging unit engages the select electromagnetic clutch within a period from when the shift electromagnetic clutch is engaged until when the shift lever reaches the Nth-gear neutral position.

6. The transmission actuating device according to claim 2, wherein
the clutch engaging/disengaging unit engages the select electromagnetic clutch within a period from when the shift electromagnetic clutch is engaged until when the shift lever reaches the Nth-gear neutral position.

7. The transmission actuating device according to any one of claims 1 to 6, wherein:
in order to shift from predetermined Nth-gear to predetermined Mth-gear, the shift driving mechanism moves the shift lever in the second direction, and the select driving mechanism moves the shift lever in the fourth direction in order to shift from Nth-gear to Mth-gear,
the transmission actuating device further comprising,
a second control unit that executes, at the time of shifting from Nth-gear to Mth-gear, control to engage both the shift electromagnetic clutch and the select electromagnetic clutch during rotation of the electric motor while executing rotation control of the electric motor to cause the shift lever to move in an oblique direction that is a resultant of the second direction and the fourth direction.
